# EUROPEAN PATENT SPECIFICATION

(11) **EP 1 154 629 B1**
(45) Date of publication and mention of the grant of the patent: **11.02.2009**
(21) Application number: 01110779.4
(22) Date of filing: 03.05.2001
(51) Int. Cl.: B41J 2/475, H04N 1/00

(54) **Optical recording method and optical recording apparatus employing the same**
Optisches Aufzeichnungsverfahren und optische Aufzeichnungsvorrichtung unter Verwendung desselben
Méthode d'enregistrement optique et appareil d'enregistrement optique l'utilisant

(30) Priority: 08.05.2000 JP 2000134405
(43) Date of publication of application: 14.11.2001
(73) Proprietor: FUJIFILM Corporation, Minato-ku Tokyo (JP)
(72) Inventor: Hayakawa, Toshirou, c/o Fuji Photo Film Co., Ltd., Kanagawa 258-8538 (JP); Mori, Nobufumi, c/o Fuji Photo Film Co., Ltd., Kanagawa 258-8538 (JP); Okazaki, Youji, c/o Fuji Photo Film Co., Ltd., Kanagawa 258-8538 (JP)
(74) Representative: Klunker . Schmitt-Nilson . Hirsch

(56) References cited:
- EP-A2- 0 842 782
- US-A- 5 940 115
- US-A- 5 986 688

## Description

### BACKGROUND OF THE INVENTION

### Field of the Invention

The present invention relates to an optical recording method according to the preamble of claim 1, in which an image is recorded on, for example, a plate for lithography or lithoprinting by directly irradiating the plate with high-power laser light, and also relates to an optical recording apparatus which employs such an optical recording method, in accordance with the preamble of claim 8. Such method and apparatus are known from US-5,986,688.

### Description of a Related Art

With a CTP (Computer to Plate) or CTC (Computer to Cylinder) plate making system in the field of printing, a plate is fabricated in such a way that image information accumulated in a computer is recorded on a photosensitive plate material (sensitized material) by using a laser scanner or the like, and that the recorded image is developed. According to the system, intermediate printing films for respective colors in a conventional photoengraving process are dispensed with. Therefore, the system is in the limelight as one having the advantages of cost curtailment, rapid processing, quality enhancement, etc.

In that depiction of the CTP or CTC plate making system which employs laser light on the basis of light-to-heat conversion, the sensitivity of the sensitized material is low to lower a depicting speed, and hence, the light of high power needs to be used for the recording. Therefore, the sensitized material has been chiefly submitted to parallel depiction by using a sensitized material mounting/recording system of outer drum type in which a plate with the sensitized material deposited on a base material backing is wound outside a drum, and by employing a laser array which includes several tens semiconductor lasers of watt class.

Such a recording system utilizing the light-to-heat conversion, however, has had the disadvantage that, since heat radiates to an ambient medium, lowering in an effective recording sensitivity is oftener incurred due to thermal diffusion as the recording is done more slowly by the parallel depiction. This phenomenon is called the "low illuminance failure", and is detailed in Hare et al.'s paper "New Method for Exposure Threshold Measurement of Laser Thermal Imaging Materials", Journal of Imaging Science and Technology Vol. 41, No. 6, Nov./Dec. 1997, p588-593. Especially in case of employing aluminum which is common as a material of the base material backing, the thermal diffusion is heavy, so that the recording sensitivity has lowered conspicuously. Another evil effect has been that the recorded image is obscured by the thermal diffusion.

With the intention of improving the drawbacks, Japanese Patent Application Laid-open JP-A-10-146996 discloses a method wherein the effective recording sensitivity is raised by heightening the scanning speed of a laser beam.

Besides, Japanese Patent Application Laid-open JP-A-11-254741 discloses a method wherein the shape of a laser beam on the sensitized material is narrowed in a main scanning direction into a flat shape, thereby to shorten the projection time of the laser beam at each point on the surface of the sensitized material and to raise the effective recording sensitivity.

Meanwhile, the sensitized material has also been submitted to the depiction by using a sensitized material mounting/recording system of inner drum type in which the plate with the sensitized material deposited on a base material backing is wound inside a drum, and by employing a YAG (Yttrium Aluminum Garnet) laser which continuously oscillates at a high power of about 10 watts or above. In this case, an image is recorded by combining an external modulator such as AOM (Acousto-Optic Modulator), and the scanning of a laser beam based on a highspeed rotating mirror. According to such a sensitized material mounting/recording system of the inner drum type, the effective recording sensitivity can be raised by shortening the projection time of the laser beam at each point on the surface of the sensitized material. However, the rise of the sensitivity is an effect derived from the necessity of recording the image at high speed by employing the single light source, and still more rise in the sensitivity has not been realized.

Therefore, further rise in the recording sensitivity is desired even when the techniques of the improvements in the sensitized material mounting/recording systems of the inner drum type and the outer drum type as explained above are employed.

### SUMMARY OF THE INVENTION

The present invention has been made in view of such problems . A first object of the present invention is to raise an effective recording sensitivity in the recording of image information on a sensitized material, whereby a productivity is enhanced owing to lowered energy (laser power) necessary for the recording or a heightened recording speed. Besides, a second object of the present invention is to improve the evil effect that a recorded image is obscured due to thermal diffusion, whereby the sharpness of the recorded image is enhanced.

In order to accomplish the objects, an optical recording method according to the present invention, wherein an image is recorded by projecting a light beam onto a sensitized material formed on a base material backing, comprises the steps of: (a) successively outputting pulse light having a duty factor of at most 50%, from a light source; (b) modulating the pulse light output from the light source, in accordance with an image signal, and then projecting the modulated pulse light onto the sensitized material; and (c) recording the image by causing the pulse light to scan the sensitized material.

Besides, an optical recording apparatus according to the present invention, wherein an image is recorded by projecting a light beam onto a sensitized material formed on a base material backing, comprises: a light source for successively outputting pulse light having a duty factor of at most 50%; modulation means for modulating the pulse light output from the light source, in accordance with an image signal, and then projecting the modulated pulse light onto the sensitized material; and scanning means for causing the pulse light to scan the sensitized material, thereby to record the image.

According to the present invention constructed as described above, an image is recorded using pulse light having a duty factor of 50% or below, whereby an effective recording sensitivity in optical recording can be enhanced. It is accordingly permitted to lower total energy necessary for the recording or to enhance the productivity by heightening a recording speed. Further, the energy for the recording is lowered, whereby the obscurity of the recorded image attributed to thermal diffusion can be improved to enhance the sharpness thereof.

### BRIEF DESCRIPTION OF THE DRAWINGS

Fig. 1 is a diagram schematically showing an optical recording apparatus according to a first embodiment of the present invention;
Fig. 2 is a graph showing the waveform of pulsed laser light which is emitted from a passively mode-locked laser shown in Fig. 1;
Fig. 3 is a graph showing the measured values of the minimum energy levels required for respective exposure times;
Fig. 4 is a perspective view showing a part of the optical recording apparatus of inner drum type according to the first embodiment of the present invention;
Fig. 5 is a diagram schematically showing the passively mode-locked laser shown in Fig. 1;
Fig. 6 is a diagram schematically showing an optical recording apparatus according to a second embodiment of the present invention;
Fig. 7 is a diagram schematically showing an optical recording apparatus according to a third embodiment of the present invention;
Fig. 8 is a diagram schematically showing an actively mode-locked laser shown in Fig. 7;
Fig. 9 is a diagram schematically showing an optical recording apparatus according to a fourth embodiment of the present invention;
Fig. 10 is a graph showing the waveform of pulsed laser light which is emitted from a Q-switching laser shown in Fig. 9;
Fig. 11 is a diagram schematically showing the Q-switching laser shown in Fig. 9; and
Fig. 12 is a perspective view showing a part of an optical recording apparatus of outer drum type according to a fifth embodiment of the present invention.

### DESCRIPTION OF THE PREFERRED EMBODIMENTS

Now, embodiments of the present invention will be described in detail with reference to the drawings. By the way, identical constituents shall be indicated by the same reference numerals and the description thereof shall be omitted.

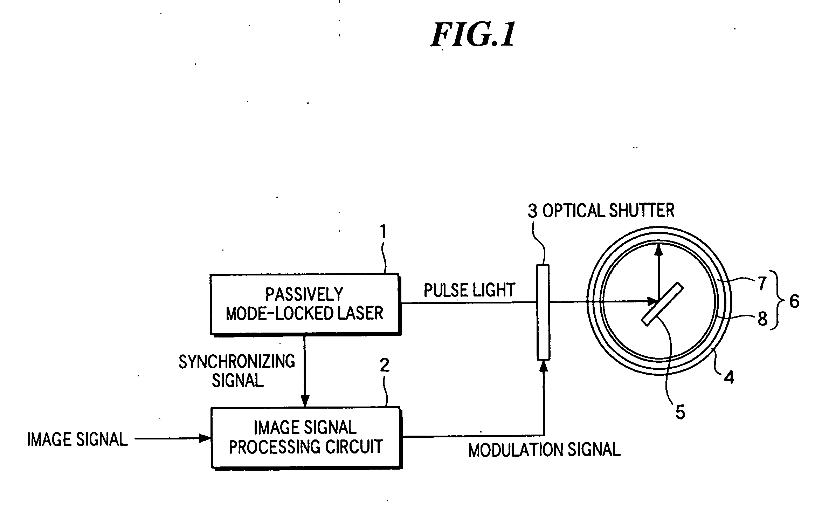

Fig. 1 is a diagram schematically showing an optical recording apparatus according to the first embodiment of the present invention. The optical recording apparatus includes a passively mode-locked laser 1 for generating pulsed laser light. A synchronizing signal synchronous with each pulse light is derived from the passively mode-locked laser 1, and is applied to an image signal processing circuit 2. The image signal processing circuit 2 creates a modulation signal for modulating the pulse light, on the basis of an image signal, and feeds the modulation signal to an optical shutter 3 in synchronism with the synchronizing signal. The optical shutter 3 modulates the pulse light generated by the passively mode-locked laser 1, in accordance with the fed modulation signal.

The pulse light modulated by the optical shutter 3 is reflected by a rotating mirror 5 disposed inside a drum 4, and the reflected light irradiates a plate 6 wound on the inner surface of the drum 4. The plate 6 includes a base material backing 7 whose material is aluminum or the like, and a sensitized material 8 which is formed on the base material backing 7. The sensitized material 8 may well be further overlaid with an overcoat layer. An image is recorded in such a way that the reflected light scans the surface of the sensitized material 8 by rotating the rotating mirror 5 at a predetermined rotational frequency.

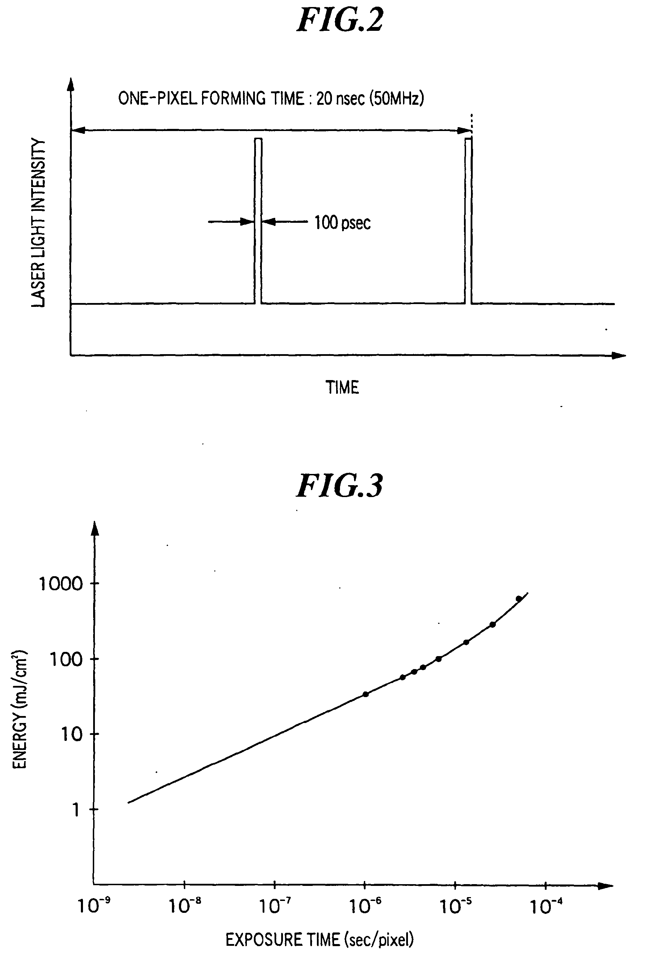

Shown in Fig. 2 is the waveform of the pulsed laser light which is emitted from the passively mode-locked laser. In order to shorten the recording time of the whole image, a recording time per pixel (hereinbelow, termed the "one-pixel forming time") is desirably set at 1 µsec or below. More preferably, the one-pixel forming time is set at 200 nsec or below. In this embodiment, the one-pixel forming time is set at 20 nsec (50MHz in terms of frequency) . By the way, in a case where only the two gradations of "1" and "0" exist in each pixel, the recording information of one pixel corresponds to one bit of the image signal.

Heretofore, laser light has been continuously projected throughout the one-pixel forming time. In contrast, according to the present invention, short-pulse light having a duty factor of 50% or below is employed for the optical recording in order to reduce the total power of the laser and to enhance an effective recording sensitivity in the recording. The short-pulse light may include either a single light pulse output from a single laser, or a plurality of light pulses output from a plurality of lasers arrayed in a predetermined direction. Besides, the number of laser pulses in the period for recording one pixel may be either one or larger. By way of example, in the case where the one-pixel forming time is 20 nsec, the exposure of the plate may be made using one laser pulse whose pulse width is 10 nsec, or it may well be made using two laser pulses by turning ON/OFF the laser light at a pulse width of 5 nsec twice.

When the laser light is projected in pulsed fashion in this manner, the total power of the laser can be reduced. As a result, it is permitted to use a laser whose rated output is lower than in the prior art. The reason therefor is that, since the rated output of a laser is chiefly determined by the steady output power thereof, the momentary output of the laser can be made higher than the rated output thereof by diminishing the duty factor of pulse light. By way of example, when the duty factor of the laser light is set at 50%, theoretically the momentary output of the laser can be made about double the rated output. Meanwhile, the effective recording sensitivity in the optical recording is improved by shortening the projection time of the laser light (the time of the exposure) for each pixel as explained before. For such reasons, it is efficient to employ the pulse light in the optical recording of image information.

The passively mode-locked laser is capable of generating short-pulse light having duration of several picoseconds to one nanosecond. With the intention of more heightening the effective recording sensitivity in the optical recording, it is considered to make the duty factor of the laser light still smaller by utilizing the laser operation. By way of example, the projection period of a laser pulse is set at 200 psec (1% of the one-pixel forming time of 20 nsec) or below, and the duty factor of the laser light is set at 1% or below. In this embodiment, the projection period of the laser pulses during the one-pixel forming time is set at (100 psec × 2), so that the laser pulses having the duty factor of 1% are employed.

In order to demonstrate that the effective recording sensitivity in the optical recording changes depending upon the exposure time, optical recording operations were carried out with the exposure time varied, and the minimum required energy levels were measured at the respective exposure times. The results obtained are shown in Fig. 3. Fig. 3 shows the minimum energy levels (in mJ/cm²) required for the respective exposure times (in seconds/pixel). Incidentally, the effective recording sensitivity in the optical recording is inversely proportional to the value of the minimum required energy.

In the measurement, a CTP plate "LH-P1" produced by Fuji Photo Film Co., Ltd. (in Japan) was used. A sensitized material employed for the plate is a positive photosensitive composition for an infrared laser. The composition contains a substance which absorbs light to generate heat, and a resin which is soluble in an alkali aqueous solution and which has a phenolic hydroxyl group. It has the property that the heated parts thereof turn soluble in the alkali aqueous solution. In addition, an aluminum plate whose surface is roughened is employed as the base material backing of the CTP plate.

Besides, in the measurement, image-developing processes are performed after the exposure of the sensitized material. An image formed in the surface of the sensitized material at the exposure is stably fixed by performing such chemical processes after the exposure. The image developing processes were carried out with an automatic developing machine "LP-900H" having immersion type developing tanks and manufactured by Fuji Photo Film Co., Ltd. They will be outlined below.

Initially, the first process is implemented in such a way that 20 liters of alkali developing-process solution are poured into the first process tank (developing process tank) of the automatic developing machine "LP-900H" and are held at a temperature of 30°C, and that the plate including the sensitized material is immersed in the solution for about 14 seconds. The alkali developing-process solution contains 2.5 weight-% of D-sorbite, 0.85 weight-% of sodium hydroxide, 0.05 weight-% of diethylenetriamine-penta(methylenephosphonic acid) pentasodium salt and 96.6 weight-% of water, and it has a pH-value of about 13.

Subsequently, the second process is implemented in such a way that 8 liters of water are poured into the second process tank of the automatic developing machine "LP-900H", and that the plate including the sensitized material is immersed in the water. Further, the third process is implemented in such a way that a rinsing solution "FP-2W" produced by Fuji Photo Film Co., Ltd. is diluted with water at 1 : 1 and is poured into the third process tank of the automatic developing machine "LP-900H", and that the plate including the sensitized material is immersed in the diluted rinsing solution.

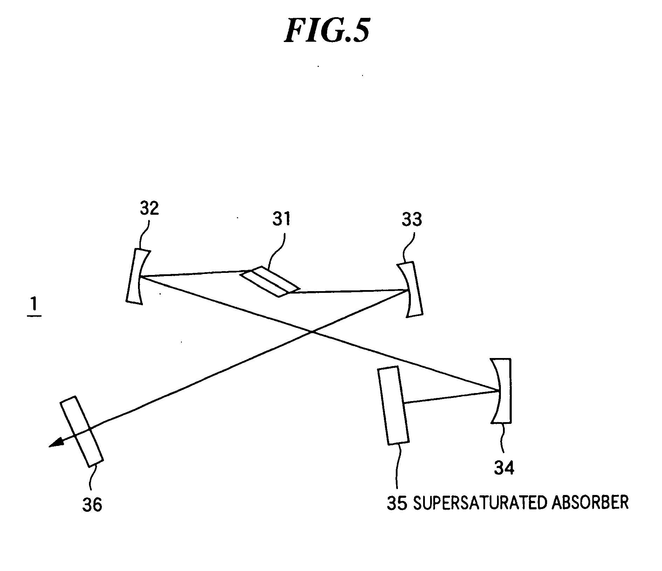

As shown in Fig. 3, the required energy is lower as the exposure time is shorter. This tendency is also indicated in the Hare et al.'s paper "New Method for Exposure Threshold Measurement of Laser Thermal Imaging Materials" cited before (Fig. 5 on page 592). The paper, however, reveals that the rise of the sensitivity (the decrease of the energy) tends to be saturated at an exposure time on the order of 10⁻⁷ sec.

In the Hare et al. paper, thermal imaging materials produced by Presstek, Inc. have been subjected to exposure, and only physical phenomena have been observed without developing images. In contrast, in the measured results shown in Figs. 2 and 3, not only the physical phenomena, but also the chemical phenomena of the image developing processes intervene, and the rise of the sensitivity (the decrease of the energy) is considered to continue down to a still shorter exposure time on the order of 10⁻⁹ sec. This is so interpreted that, since light is more absorbed nearer to the surface of the sensitized material and is diffused less at the surface of the sensitized material at the exposure step, an image will be finally fixed by any chemical reaction at the subsequent development step even with the shorter exposure.

Various mechanisms are included in the rises of the effective recording sensitivity based on shortening the exposure time in this manner, and any of them may be utilized in the present invention. In, for example, a CTP plate which employs thermal mode recording for a sensitized material formed on a metal substrate, the influence of thermal diffusion is inevitable even when a heat insulating layer is formed on the base material backing, so that the rise of the effective recording sensitivity is attained by shortened pulses.

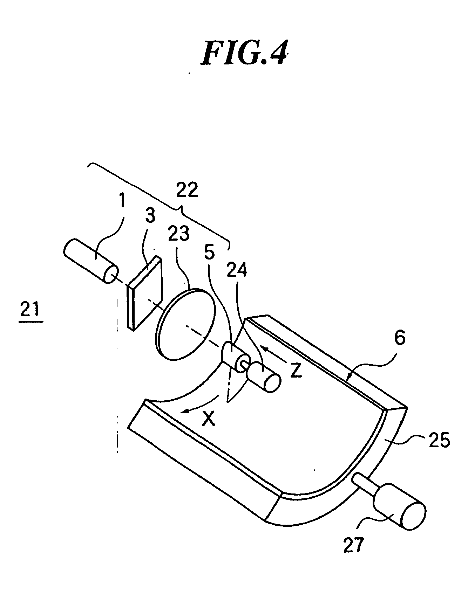

Referring now to Figs. 4 and 5, the optical recording apparatus according to the first embodiment of the present invention will be described in detail.

Fig. 4 is a perspective view showing a part of the optical recording apparatus of inner drum type in this embodiment. The inner drum type optical recording apparatus 21 includes a drum 25 whose inner surface is cylindrical. A plate 6 in which a sensitized material is deposited on a base material backing of aluminum or the like, is fixed inside the drum 25. The drum 25 is driven by a drum moving mechanism 27 so as to move in a direction along the axis of the drum 25 (a Z-direction indicated in the figure).

The optical system 22 of the optical recording apparatus 21 includes a passively mode-locked laser 1, an optical shutter 3 and a rotating mirror 5. Further, a collective lens 23 may well be disposed. Pulse light generated by the passively mode-locked laser 1 is modulated by the optical shutter 3 which is turned ON/OFF (opened/shut) in accordance with an image signal. The pulse light passed through the optical shutter 3 is focused by the collective lens 23. The focal point of the focusing is adjusted so as to lie in the vicinity of the surface of the sensitized material of the plate 6.

The pulse light exiting from the collective lens 23 enters the rotating mirror 5. The face of the rotating mirror 5 on the side of the collective lens 23 is inclined by 45° relative to the axis of the optical system 22. The laser light impinging on the face enters the surface of the sensitized material of the plate 6 substantially perpendicularly thereto. The rotating mirror 5 is driven by a motor 24 so as to rotate fast about the same axis as the drum axis. That position of the sensitized material on which the laser light impinges is changed by the rotation of the rotating mirror 5, and the laser light scans the surface of the sensitized material in a main scanning direction (an X-direction indicated in the figure). Incidentally, since the plate 6 is moved in the direction along the drum axis (the Z-direction indicated in the figure), the laser light scans the surface of the sensitized material in two dimensions in the main scanning direction and the sub scanning direction.

Fig. 5 is a diagram schematically showing the passively mode-locked laser 1 which is used in the optical recording apparatus in this embodiment. The passively mode-locked laser 1 includes a laser medium 31 which amplifies laser light by utilizing population inversion. Usable as the laser medium 31 is an Nd:YAG medium employing a crystal in which yttrium aluminum garnet (Y₃Al₅O₁₂) is doped with neodymium (Nd) as an impurity. Alternatively, an Nd:YLF (YLiF₄) medium, an Nd:YVO₄ medium, or the like may well be used instead of the Nd:YAG medium.

Two mirrors 32, 33 which reflect the light amplified by the laser medium 31, are located on both the sides of the laser medium 31. Also disposed are a mirror 34 which reflects the light between the mirror 32 and a supersaturated absorber 35, and an emission mirror 36 which reflects a part of the light entered from the mirror 33 and emits the other part thereof. Thus, the passively mode-locked laser 1 oscillates in a plurality of modes employing different frequencies. The supersaturated absorber 35 absorbs a part of the light entered from the mirror 34, thereby to bring the phases of the plurality of oscillation modes into agreement.

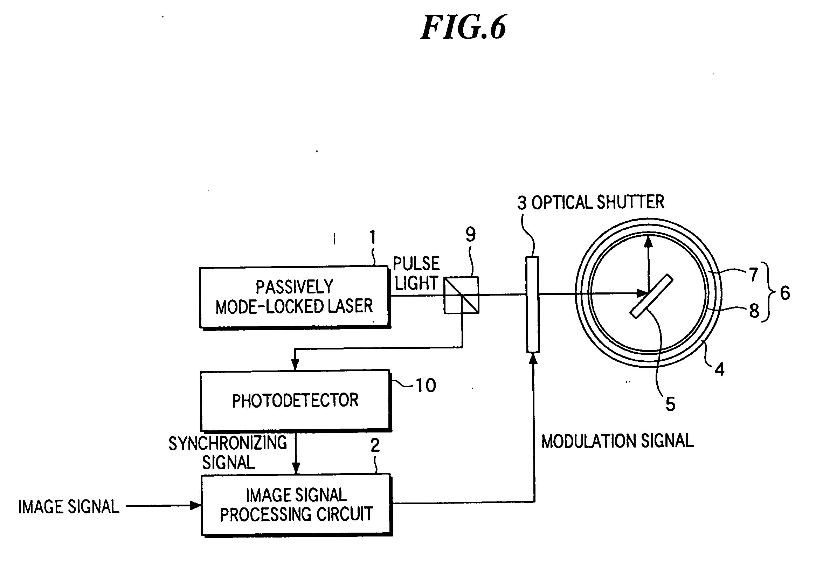

Next, an optical recording apparatus according to the second embodiment of the present invention will be described with reference to Fig. 6. Fig. 6 is a diagram schematically showing the optical recording apparatus in the second embodiment of the present invention. In this optical recording apparatus, instead of deriving the synchronizing signal synchronous with each pulse light from the passively mode-locked laser 1 as in the first embodiment, a synchronizing signal is obtained in such a way that the pulse light output from the passively mode-locked laser 1 is split by a beam splitter 9 so as to partly enter a photodetector 10. The other points are the same as in the first embodiment.

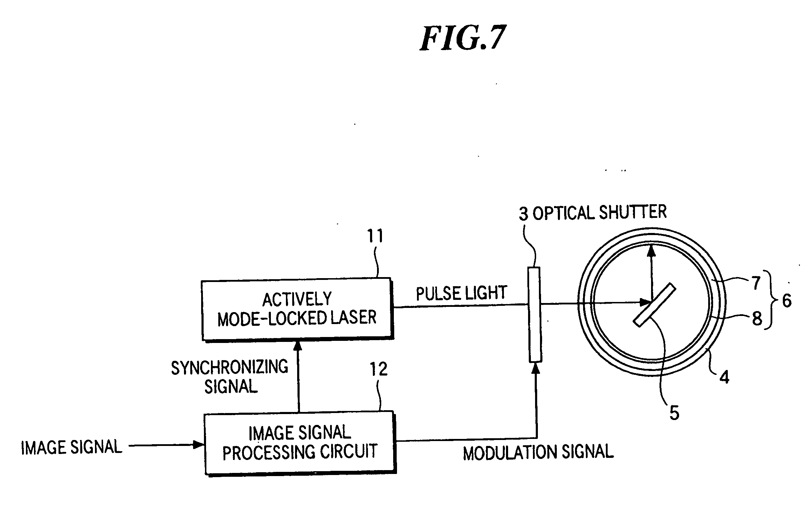

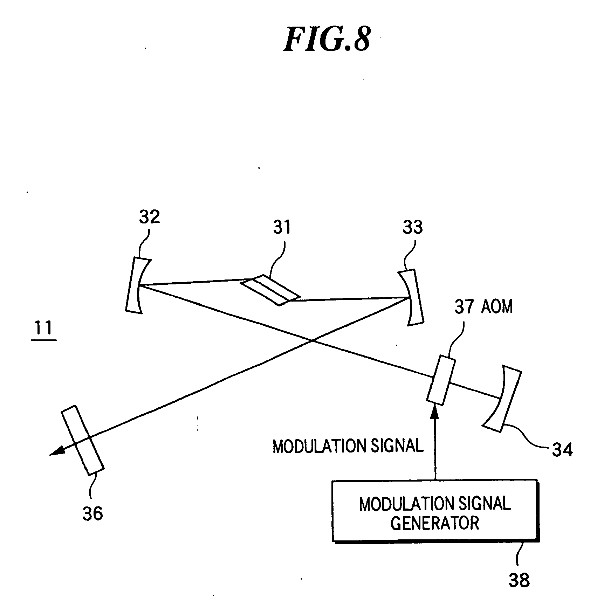

Next, an optical recording apparatus according to the third embodiment of the present invention will be described with reference to Figs. 7 and 8.

Fig. 7 is a diagram schematically showing the optical recording apparatus in the third embodiment of the present invention. This optical recording apparatus employs an actively mode-locked laser 11 instead of the passively mode-locked laser. The actively mode-locked laser 11 can output pulse light in synchronism with a synchronizing signal which is externally applied. Therefore, the pulse light as desired can be obtained by creating the synchronizing signal in an image signal processing circuit 12 and applying it to the actively mode-locked laser 11.

Fig. 8 is a diagram schematically showing the actively mode-locked laser which is used in the optical recording apparatus in this embodiment. The actively mode-locked laser 11 employs, for example, an Nd:YAG medium as a laser medium 31. Two mirrors 32, 33 which reflect the light amplified by the laser medium 31, are located on both the sides of the laser medium 31. Also disposed are a mirror 34 which reflects light entered through an AOM (Acousto-Optic Modulator) 37 from the mirror 32, and an emission mirror 36 which reflects a part of the light entered from the mirror 33 and emits the other part thereof. Thus, the actively mode-locked laser 11 oscillates in a plurality of modes employing different frequencies. The AOM 37 modulates the entered light in accordance with a modulation signal output from a modulation signal generator 38, thereby to bring the phases of the plurality of oscillation modes into agreement.

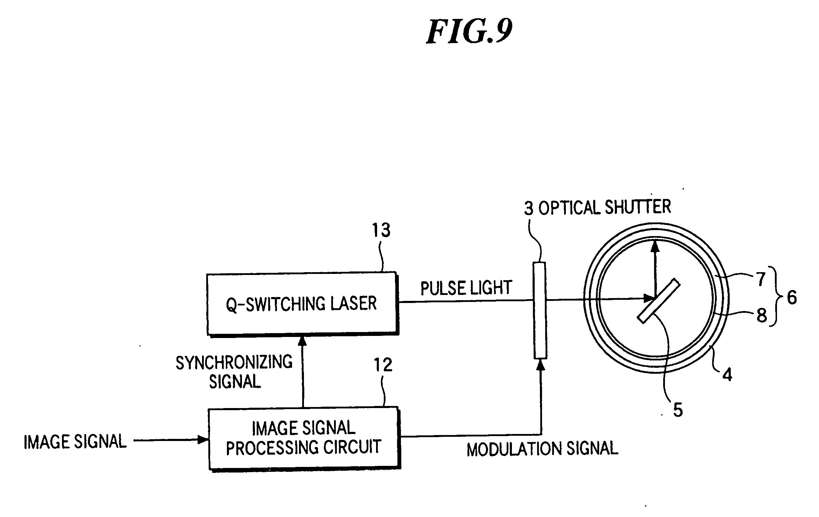

Next, an optical recording apparatus according to the fourth embodiment of the present invention will be described with reference to Figs. 9-11.

Fig. 9 is a diagram schematically showing the optical recording apparatus in the fourth embodiment of the present invention. This optical recording apparatus employs a Q-switching laser 13. The Q-switching laser 13 can output pulse light in synchronism with a synchronizing signal which is externally applied. Therefore, the pulse light as desired can be obtained by creating the synchronizing signal in an image signal processing circuit 12 and applying it to the Q-switching laser 13.

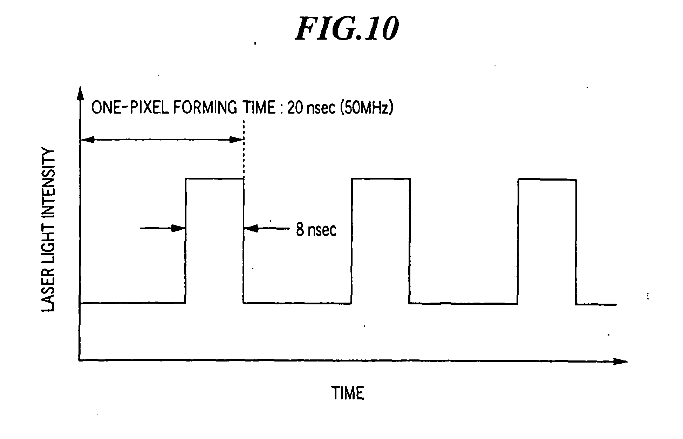

Shown in Fig. 10 is the waveform of the pulsed laser light which is emitted from the Q-switching laser 13. A solid state laser or fiber laser based on Q-switching is capable of generating short pulse light of several nanoseconds to several tens nanoseconds. In this embodiment, the projection period of a laser pulse during a one-pixel forming time of 20 nsec is set at 8 nsec, which corresponds to 40% of the one-pixel forming time. Thus, the laser pulses having the duty factor of 40% are employed.

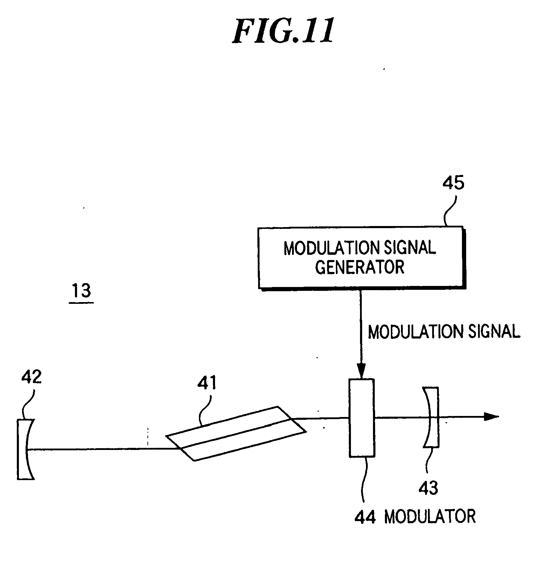

Fig. 11 is a diagram schematically showing the Q-switching laser 13 which is used in the optical recording apparatus in this embodiment. Regarding the laser medium 41 of the Q-switching laser 13, any of various media including an Nd:YAG medium, an Nd:YLF medium, an Nd: YVO₄ medium, etc. can be used as a solid-state laser medium. A total reflection mirror 42 and a partial reflection mirror 43 which reflect light amplified by the laser medium 41, are located on both the sides of the laser medium 41. Thus, the Q-switching laser 13 oscillates in a plurality of modes employing different frequencies. Here, a modulator 44 is interposed between the laser medium 41 and the mirror 43 as means for controlling the loss or gain of the laser light. The modulator 44 is constructed of, for example, an AOM (Acousto-Optic Modulator), and it brings the phases of the plurality of oscillation modes into agreement by modulating the entered light in accordance with a modulation signal input from a modulation signal generator 45. Apart from the AOM, any of various modulators such as an EO (Electro-Optic) modulator can be used as the modulator 44.

In the same arrangement, it is also possible to apply the fiber laser which employs an optical fiber doped with Nd, Yb (ytterbium) or the like as a laser medium. Further, it is also allowed to use a gain-switching laser which employs a semiconductor as gain control means. An ordinary semiconductor laser of current injection type is capable of generating pulse light on the basis of gain switching for modulating an injected current. The gain switching laser is capable of generating short pulse light of several tens picoseconds to several nanoseconds.

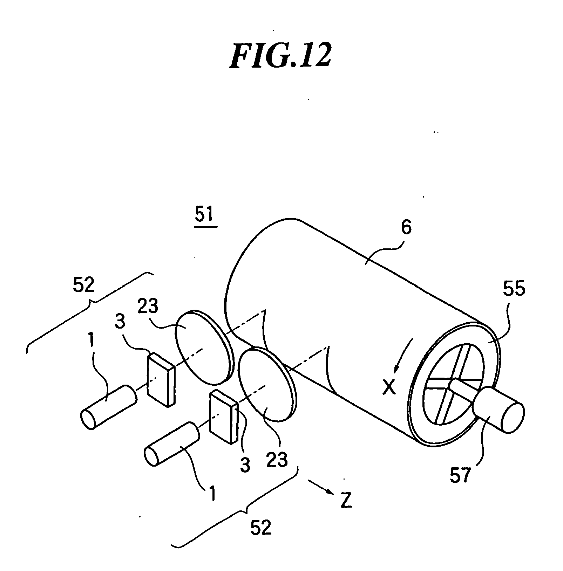

Next, an optical recording apparatus according to the fifth embodiment of the present invention will be described with reference to Fig. 12. Fig. 12 is a perspective view showing a part of the optical recording apparatus of outer drum type in this embodiment. In this embodiment, a sensitized material mounting/recording system of the outer drum type is adopted unlike that of the inner drum type as shown in Fig. 4, and the other points are the same as in the foregoing embodiments. Here, an example employing passively mode-locked lasers will be explained.

The optical recording apparatus 51 of the outer drum type includes a drum 55 whose outer surface is cylindrical. A plate 6 in which a sensitized material is deposited on a base material backing of aluminum or the like, is wound outside the drum 55. The drum 55 is driven by a rotating mechanism 57 including a motor, reduction gears, etc., so as to rotate in a direction along the circumference of the drum 55 (an X-direction indicated in the figure).

Each of two optical systems 52 includes the passively mode-locked laser 1, and an optical shutter 3. Further, a collective lens 23 may well be disposed. Pulse light generated by the passively mode-locked laser 1 is modulated by the optical shutter 3 which is turned ON/OFF (opened/shut) in accordance with an image signal. The pulse light passed through the optical shutter 3 is focused by the collective lens 23. The focal point of the focusing is adjusted so as to lie in the vicinity of the surface of the sensitized material of the plate 6. The pulse light exiting from the collective lens 23 enters the surface of the sensitized material of the plate 6 substantially perpendicularly thereto.

During the recording of an image, the drum 55 is rotated fast in the direction along the circumference thereof (in the X-direction indicated in the figure) , while at the same time, the whole optical systems 52 are moved in a direction parallel to the axis of the drum 55 (in a Z-direction indicated in the figure). Accordingly, the laser light two-dimensionally scans the surface of the sensitized material in the main scanning direction and the sub scanning direction. An optical scanner such as polygon mirror or galvano mirror is also usable for the scanning in the Z-direction.

As thus far described, according to the present invention, an image is recorded by employing pulse light having a period of 50% or below of a recording period for one pixel or pulse light having a duty factor of 50% or below, whereby an effective recording sensitivity in optical recording can be enhanced. It is accordingly possible to lower total energy required for the recording. Besides, it is permitted to form the image at high speed owing to the enhancement of the sensitivity, and to shorten a printing process employing a plate on which such an image is recorded. Further, the obscurity of the recorded image attributed to thermal diffusion can be improved to enhance the sharpness thereof by lowering the recording energy.

Moreover, the use of a laser of low rated power is permitted by shaping the laser light into short pulses, so that the cost of a laser light source can be lowered. The generation of the short pulse light by, for example, a passively mode-locked solid state laser or fiber laser can be easily realized by inserting a supersaturated absorber. Accordingly, it is greatly advantageous that the low power laser can be adopted by shaping the laser light into the short pulses.

## Claims

1. An optical recording method wherein an image is recorded by projecting a light beam onto a sensitized material (8) formed on a base material backing (7), comprising the steps of:
(a) successively outputting pulse light from a light source (1, 11, 13);
(b) modulating the pulse light output from the light source (1, 11 or 13), in accordance with an image signal, and then projecting the modulated pulse light onto the sensitized material (8); and
(c) recording the image by causing said pulse light to scan said sensitized material (8), **characterized in that** said pulse light has a duty factor of at most 50%.

2. An optical recording method according to claim 1, wherein step (a) includes outputting a single light pulse in order to record each pixel.

3. An optical recording method according to claim 1, wherein step (a) includes outputting a plurality of light pulses in order to record each pixel.

4. An optical recording method according to claim 1, wherein step (a) includes successively outputting the pulse light having a duration of at most 50% in a recording time period for each pixel.

5. An optical recording method according to claim 4, wherein the recording time period for each pixel is at most 1 µsec, and the duration in which the pulse light is projected in order to record each pixel is at most 1% of said recording time period.

6. An optical recording method according to claim 1, wherein step (c) includes outputting the laser pulse light by using one of mode locking, Q-switching and gain switching.

7. An optical recording method according to claim 1, wherein said sensitized material (8) is submitted to recording by utilizing light-to-heat exchange reaction.

8. An optical recording apparatus wherein an image is recorded by projecting a light beam onto a sensitized material (8) formed on a base material backing (7), comprising:
a light source (1, 11, or 13) for successively outputting pulse light;
modulation means (3) for modulating the pulse light output from said light source (1, 11, 13) in accordance with an image signal, and then projecting the modulated pulse light onto the sensitized material (8); and
scanning means (5) for causing said pulse light to scan said sensitized material (8), thereby to record the image **characterized in that** said light source is adapted to output said pulse light having a duty factor of at most 50%.

9. An optical recording apparatus according to claim 8, wherein said light source (1, 11, 13) outputs a single light pulse in order to record each pixel.

10. An optical recording apparatus according to claim 8, wherein said light source (1, 11, 13) outputs a plurality of light pulses in order to record each pixel.

11. An optical recording apparatus according to claim 8, wherein said light source (1, 11, 13) successively outputs the pulse light having a duration of at most 50% of a recording time period for each pixel.

12. An optical recording apparatus according to claim 11, wherein the recording time period for each pixel is at most 1 µsec, and the duration in which the pulse light is projected in order to record each pixel is at most 1% of said recording time period.

13. An optical recording apparatus according to claim 8, wherein said light source (1, 11, 13) is one of a mode-locked laser, a Q-switching laser and a gain switching laser.

14. An optical recording apparatus according to claim 13, wherein said mode-locked laser outputs to said modulation means 3 a synchronizing signal which is used in modulating and outputting said pulse light.

15. An optical recording apparatus according to claim 8, wherein said sensitized material (8) is submitted to recording by utilizing light-to-heat exchange reaction.

## Patentansprüche

1. Optisches Aufzeichnungsverfahren, bei dem ein Bild dadurch aufgezeichnet wird, dass ein Lichtstrahlbündel auf ein empfindlich gemachtes Material (8) projiziert wird, welches auf einer Grundmaterialschicht (7) ausgebildet ist, umfassend folgende Schritte:
(a) sukzessives Ausgeben von gepulstem Licht aus einer Lichtquelle (1, 11, 13);
(b) Modulieren des gepulsten Lichts aus der Lichtquelle (1, 11, 13) abhängig von einem Bildsignal und anschließendes Projizieren des modulierten gepulsten Lichts auf das empfindlich gemachte Material (8);
(c) Aufzeichnen des Bildes dadurch, dass das gepulste Licht dazu gebracht wird, das empfindlich gemachte Material (8) abzutasten, **dadurch gekennzeichnet, dass** das gepulste Licht ein Tastverhältnis von höchstens 50 % aufweist.

2. Verfahren nach Anspruch 1, bei dem der Schritt (a) das Ausgeben eines einzelnen Lichtpulses zur Aufzeichnung jedes Pixels beinhaltet.

3. Verfahren nach Anspruch 1, bei dem der Schritt (a) das Ausgeben mehrerer Lichtpulse zum Aufzeichnen jedes Pixels aufweist.

4. Verfahren nach Anspruch 1, bei dem der Schritt (a) das sukzessive Ausgeben des gepulsten Lichts mit einer Dauer von höchstens 50 % innerhalb einer Aufzeichnungszeitspanne für jedes Pixel enthält.

5. Verfahren nach Anspruch 4, bei dem die Aufzeichnungszeitspanne für jedes Pixel höchstens 1µs beträgt, und die Dauer, innerhalb der das gepulste Licht zum Aufzeichnen jedes Pixels projiziert wird, höchstens 1 % der Aufzeichnungszeitspanne beträgt.

6. Verfahren nach Anspruch 1, bei dem der Schritt (c) das Ausgeben des gepulsten Laserlichts unter Verwendung der Modenkopplung, des Q-Schaltens und des Verstärkungs-Umschaltens beinhaltet.

7. Verfahren nach Anspruch 1, bei dem das empfindlich gemachte Material (8) unter Ausnutzung der Licht-Wärme-Austauschreaktion der Aufzeichnung unterzogen wird.

8. Optische Aufzeichnungsvorrichtung, bei der ein Bild dadurch aufgezeichnet wird, dass ein Lichtstrahlbündel auf ein empfindlich gemachtes Material (8) auf einer Grundmaterialschicht projiziert wird, umfassend:
eine Lichtquelle (1, 11, 13) zum sukzessiven Ausgeben gepulsten Lichts;
eine Moduliereinrichtung (13) zum Modulieren des von der Lichtquelle (1, 11, 13) ausgegebenen gepulsten Lichts abhängig von einem Bildsignal, und zum anschließenden Projizieren des modulierten gepulsten Lichts auf das empfindlich gemachte Material (8); und
eine Abtasteinrichtung (5) zum Veranlassen des gepulsten Lichts, das empfindlich gemachte Material (8) abzutasten und dadurch das Bild aufzuzeichnen, **dadurch gekennzeichnet, dass** die Lichtquelle dazu ausgebildet ist, das gepulste Licht mit einem Tastverhältnis von höchstens 50 % auszugeben.

9. Vorrichtung nach Anspruch 8, bei der die Lichtquelle (1, 11, 13) einen Einzel-Lichtpuls zur Aufzeichnung jedes Pixels ausgibt.

10. Vorrichtung nach Anspruch 8, bei der die Lichtquelle (1, 11, 13) mehrere Lichtpulse zum Aufzeichnen jedes Pixels ausgibt.

11. Vorrichtung nach Anspruch 8, bei der die Lichtquelle (1, 11, 13) sukzessive das gepulste Licht mit einer Dauer von höchstens 50 % einer Aufzeichnungszeitspanne für jedes Pixel ausgibt.

12. Vorrichtung nach Anspruch 11, bei der die Aufzeichnungszeitspanne für jedes Pixel höchstens 1µs beträgt und die Dauer, innerhalb der das gepulste Licht zum Aufzeichnen jedes Pixels projiziert wird, höchstens 1 % der Aufzeichnungszeitspanne ausmacht.

13. Vorrichtung nach Anspruch 8, bei der die Lichtquelle (1, 11, 13) ein Laser mit Modenkopplung, ein Q-Switch-Laser oder ein Gain-Switch-Laser ist.

14. Vorrichtung nach Anspruch 13, bei der der modengekoppelte Laser an die Moduliereinrichtung ein Synchronisationssignal ausgibt, welches beim Modulieren und beim Ausgeben des gepulsten Lichts verwendet wird.

15. Vorrichtung nach Anspruch 8, bei der das empfindlich gemachte Material (8) im Aufzeichnungsvorgang durch Ausnutzung der Licht-Wärme-Austauschreaktion unterzogen wird.

## Revendications

1. Procédé d'enregistrement optique, dans lequel une image est enregistrée en projetant un faisceau lumineux sur un matériau rendu sensible (8) formé sur un support de matériau formant base (7), comprenant les étapes pour :
(a) émettre de manière successive une lumière pulsée à partir d'une source de lumière (1, 11, 13) ;
(b) moduler la lumière pulsée émise à partir de la source de lumière (1, 11, 13) en fonction d'un signal-image, puis projeter la lumière pulsée modulée sur le matériau rendu sensible (8), et
(c) enregistrer l'image en amenant ladite lumière pulsée à balayer ledit matériau rendu sensible (8), **caractérisé en ce que** ladite lumière pulsée présente un facteur d'utilisation d'au maximum 50%.

2. Procédé d'enregistrement optique selon la revendication 1, dans lequel l'étape (a) inclut l'émission d'une seule impulsion lumineuse pour enregistrer chaque pixel.

3. Procédé d'enregistrement optique selon la revendication 1, dans lequel l'étape (a) inclut l'émission d'une pluralité d'impulsions lumineuses pour enregistrer chaque pixel.

4. Procédé d'enregistrement optique selon la revendication 1, dans lequel l'étape (a) inclut l'émission successive de lumière pulsée présentant une durée d'au maximum 50% sur une période de temps d'enregistrement pour chaque pixel.

5. Procédé d'enregistrement optique selon la revendication 4, dans lequel la période de temps d'enregistrement pour chaque pixel est au maximum de 1 µs, et la durée sur laquelle la lumière pulsée est projetée afin d'enregistrer chaque pixel est d'au maximum 1 % de ladite période de temps d'enregistrement.

6. Procédé d'enregistrement optique selon la revendication 1, dans lequel l'étape (c) inclut l'émission de la lumière pulsée laser en utilisant une parmi la commutation à modes verrouillés, la commutation-Q et la commutation gain.

7. Procédé d'enregistrement optique selon la revendication 1, dans lequel ledit matériau rendu sensible (8) est soumis à un enregistrement en utilisant une réaction d'échange lumière-chaleur.

8. Appareil d'enregistrement optique, dans lequel une image est enregistrée en projetant un faisceau lumineux sur un matériau rendu sensible (8) formé sur un support de matériau formant base (7), comprenant :
une source de lumière (1, 11, 13) destinée à émettre successivement une lumière pulsée ;
un moyen de modulation (3) destiné à moduler la lumière pulsée émise à partir de ladite source de lumière (1, 11, 13) en fonction d'un signal-image, puis à projeter la lumière pulsée modulée sur le matériau rendu sensible (8), et
(c) un moyen de balayage (5) destiné à amener ladite lumière pulsée à balayer ledit matériau rendu sensible (8), afin ainsi d'enregistrer l'image, **caractérisé en ce que** ladite source de lumière est apte à émettre ladite lumière pulsée présentant un facteur d'utilisation d'au maximum 50%.

9. Appareil d'enregistrement optique selon la revendication 8, dans lequel ladite source de lumière (1, 11, 13) émet une seule impulsion de lumière afin d'enregistrer chaque pixel.

10. Appareil d'enregistrement optique selon la revendication 8, dans lequel ladite source de lumière (1, 11, 13) émet une pluralité d'impulsions lumineuses pour enregistrer chaque pixel.

11. Appareil d'enregistrement optique selon la revendication 8, dans lequel ladite source de lumière (1, 11, 13) émet successivement la lumière pulsée présentant une durée d'au maximum 50% d'une période de temps d'enregistrement pour chaque pixel.

12. Appareil d'enregistrement optique selon la revendication 11, dans lequel la période de temps d'enregistrement pour chaque pixel est au maximum de 1 µs, et la durée sur laquelle la lumière pulsée est projetée afin d'enregistrer chaque pixel est d'au maximum 1 % de ladite période de temps d'enregistrement.

13. Appareil d'enregistrement optique selon la revendication 8, dans lequel ladite source de lumière (1, 11, 13) est un parmi un laser à modes verrouillés, un laser à commutation-Q, et un laser à commutation gain.

14. Appareil d'enregistrement optique selon la revendication 13, dans lequel ledit laser à modes verrouillés envoie audit moyen de modulation (3) un signal de synchronisation utilisé pour la modulation et l'émission de ladite lumière pulsée.

15. Appareil d'enregistrement optique selon la revendication 8, dans lequel ledit matériau rendu sensible (8) est soumis à un enregistrement en utilisant une réaction d'échange lumière-chaleur.
